(19)

Europäisches Patentamt

European Patent Office

Office européen des brevets

(11) **EP 3 209 035 A1**

(12) **EUROPEAN PATENT APPLICATION**

(43) Date of publication:
23.08.2017 Bulletin 2017/34

(51) Int Cl.:
*H04S 7/00* (2006.01)

(21) Application number: 16305199.8

(22) Date of filing: 19.02.2016

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **Kordon, Sven**
**31515 Wunstorf (DE)**

• **Jithin, Zacharias**
**64287 Darmstadt (DE)**
• **Steinborn, Peter**
**31275 Lehrte (DE)**
• **Gries, Ulrich**
**30419 Hannover (DE)**
• **Boehm, Johannes**
**37081 Göttingen (DE)**
• **Freimann, Achim**
**30163 Hannover (DE)**

(74) Representative: **Huchet, Anne et al**
**TECHNICOLOR**
**1-5, rue Jeanne d'Arc**
**92130 Issy-les-Moulineaux (FR)**

(54) **METHOD, COMPUTER READABLE STORAGE MEDIUM, AND APPARATUS FOR MULTICHANNEL AUDIO PLAYBACK ADAPTION FOR MULTIPLE LISTENING POSITIONS**

(57) A method, a computer readable medium, and an apparatus (20, 30) for multichannel audio playback adaptation. A user input defining a listening region relative to a loudspeaker arrangement is received (10) via an input (21). A distance calculating unit (22) the determines (11) minimal distances between the listening region and the loudspeakers. A comparator (23) compares (12) the determined minimal distances with a critical distance. A parameter setting unit (24) then adapts (13) output parameters for those loudspeakers for which the determined minimal distance is below the critical distance.

EP 3 209 035 A1

Fig. 1

## Description

### FIELD

The present solution relates to a method for multichannel audio playback adaptation for multiple listening positions. Further, the solution relates to a computer readable storage medium having stored therein instructions enabling multichannel audio playback adaptation for multiple listening positions. Furthermore, the solution relates to an apparatus configured to perform multichannel audio playback adaptation for multiple listening positions.

### BACKGROUND

For multichannel audio playback in a home environment the number of listeners and their positions are flexible. This makes it difficult to optimize the playback for all possible listener arrangements with only one optimization setting. State of the art playback systems handle this problem by optimizing the playback for a larger listening region. Unfortunately, this approach is not optimal in case only one listener is present.

One additional problem, which typically occurs in small living rooms, are listeners sitting close to a loudspeaker. This situation can be very annoying for these listeners.

A solution that enables a user to adapt the playback level of the loudspeakers in accordance with the actual positions of all listeners would be desirable in order to create a pleasant listening experience for all listeners.

### SUMMARY

According to one aspect, a method for multichannel audio playback adaptation comprises:

- receiving a user input defining a listening region relative to a loudspeaker arrangement;
- determining minimal distances between the listening region and the loudspeakers;
- comparing the determined minimal distances with a critical distance; and
- adapting output parameters for those loudspeakers for which the determined minimal distance is below the critical distance.

Similarly, a computer readable storage medium has stored therein instructions enabling multichannel audio playback adaptation, wherein the instructions, when executed by a computer, cause the computer to:

- receive a user input defining a listening region relative to a loudspeaker arrangement;
- determine minimal distances between the listening region and the loudspeakers;
- compare the determined minimal distances with a critical distance; and
- adapt output parameters for those loudspeakers for which the determined minimal distance is below the critical distance.

Also, in one embodiment an apparatus for multichannel audio playback adaptation comprises:

- an input configured to receive a user input defining a listening region relative to a loudspeaker arrangement;
- a distance calculating unit configured to determine minimal distances between the listening region and the loudspeakers;
- a comparator configured to compare the determined minimal distances with a critical distance; and
- a parameter setting unit configured to adapt output parameters for those loudspeakers for which the determined minimal distance is below the critical distance.

In another embodiment, an apparatus for multichannel audio playback adaptation comprises a processing device and a memory device having stored therein instructions, which, when executed by the processing device, cause the apparatus to:

- receive a user input defining a listening region relative to a loudspeaker arrangement;
- determine minimal distances between the listening region and the loudspeakers;
- compare the determined minimal distances with a critical distance; and
- adapt output parameters for those loudspeakers for which the determined minimal distance is below the critical distance.

According to the present solution the users defines one or more listening regions, e.g. using a user interface of the playback device or a dedicated input device. A listening region is the area where listeners are located relatively to the loudspeaker positions. A process adapts the output parameters, such as level/gain and delay, for the signals that are routed to loudspeakers that are too close to certain listeners. The critical distance may be determined based on the precedence or Haas effect. The whole process may be performed by the actual playback device, by the input device, or by another connected device. The output parameters are adapted such that sound produced by those loudspeakers is less dominant relative to sound produced by the other loudspeakers. This ensures a pleasant listening experience also for those listeners that sit close to the loudspeakers.

Preferably, the user input is obtained by a touch pad of an input device, e.g. of a tablet or smartphone. Today smartphones or tablets are available in many households. These devices are already equipped with a touch pad and are thus well suited as an input device.

The listening regions are preferably specified by the user relative to the loudspeaker positions using a top view of the listening room. Only listening regions inside the area bounded by the loudspeakers are valid. Regions behind the loudspeakers are invalid. This aspect is preferably taken into account when the listening regions are specified by the user by checking whether the user tries to specify an invalid listening region. In such a case a warning is preferably given to the user.

In one embodiment, a further user input selecting a listening region among one or more defined listening regions is received. The output parameters of the loudspeakers are then adapted such that audio playback is optimized for the selected listening region. In this way the user can select the right listening region from a menu that best matches the actual positioning of the listeners.

## BRIEF DESCRIPTION OF THE DRAWINGS

Fig. 1    is a simplified flow chart illustrating a method for multichannel audio playback adaptation;

Fig. 2    schematically depicts a first embodiment of an apparatus for multichannel audio playback adaptation;

Fig. 3    schematically shows a second embodiment of an apparatus for multichannel audio playback adaptation;

Fig. 4    depicts an example of a user interface showing a listening region for one listener; and

Fig. 5    shows the user interface of Fig. 4 with multiple listening regions.

## DETAILED DESCRIPTION OF PREFERRED EMBODIMENTS

For a better understanding the principles of embodiments of the invention shall now be explained in more detail in the following description with reference to the figures. It is understood that the invention is not limited to these exemplary embodiments and that specified features can also expediently be combined and/or modified without departing from the scope of the present invention as defined in the appended claims. In the drawings, the same or similar types of elements or respectively corresponding parts are provided with the same reference numbers in order to prevent the item from needing to be reintroduced.

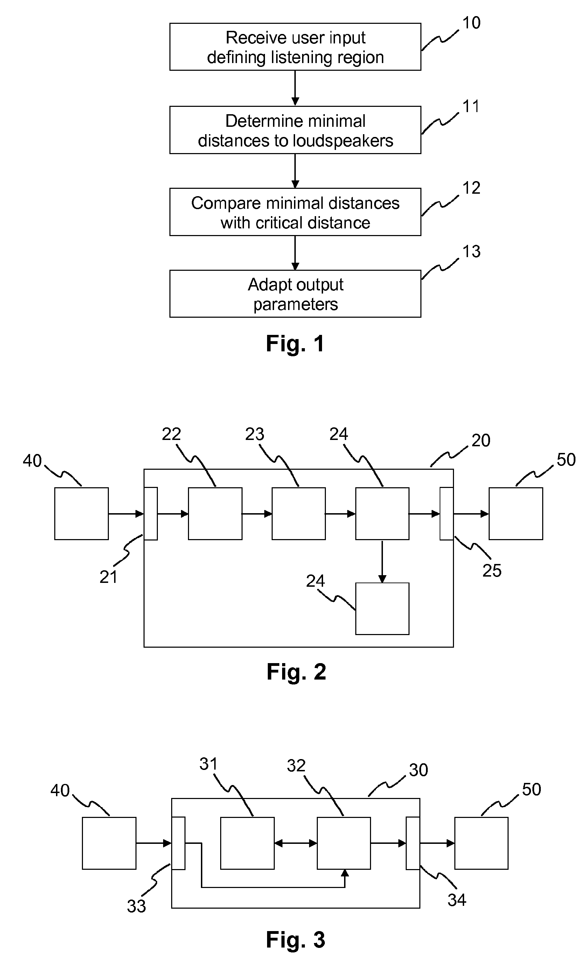

Fig. 1 depicts a simplified flow chart illustrating a method for multichannel audio playback adaptation. First a user input defining a listening region relative to a loudspeaker arrangement is received 10. Then minimal distances between the listening region and the loudspeakers are determined 11. These determined minimal distances are compared 12 with a critical distance. Finally, output parameters are adapted 13 for those loudspeakers for which the determined minimal distance is below the critical distance. In particular, the output parameters are adapted 13 such that sound produced by those loudspeakers is less dominant relative to sound produced by the other loudspeakers. The critical distance is preferably determined based on the precedence effect, which is also known as the Haas effect. The output parameters that are adapted 13 are, for example, gain parameters and delay parameters.

Fig. 2 shows a simplified schematic illustration of an apparatus 20 for multichannel audio playback adaptation. The apparatus 20 has an input 21 for receiving 10 a user input defining a listening region relative to a loudspeaker arrangement. For example, the user input may be obtained by a touch pad of an input device 40. A distance calculating unit 22 determines 11 minimal distances between the listening region and the loudspeakers. A comparator 23 then compares 12 the determined minimal distances with a critical distance. A parameter setting unit 24 adapts 13 output parameters for those loudspeakers for which the determined minimal distance is below the critical distance. The adapted output parameters are made available via an output 25 for further processing, e.g. to a playback device 50. Alternatively or in addition, they may be stored on a storage unit 24. The output 25 may also be combined with the input 21 into a single bidirectional interface. The distance calculating unit 22, the comparator 23, and the parameter setting unit 24 can be embodied as dedicated hardware, e.g. as an integrated circuit. Of course, they may likewise be fully or partially combined into or implemented as software running on a suitable processor. In Fig. 2, the apparatus 20 is coupled to the input device 40 using a wireless or a wired connection. However, the apparatus 20 may also be an integral part of the input device 40.

In Fig. 3, there is another apparatus 30 for multichannel audio playback adaptation. The apparatus 30 comprises a processing device 32 and a memory device 31. The apparatus 30 is for example a computer or workstation. The memory device 31 has stored therein instructions, which, when executed by the processing device 32, cause the apparatus 30 to perform steps according to one of the described methods. As before, the user input received via an input 33. Output parameters generated by the processing device 31 are made available via an output 34. In addition, they may be stored on the memory device 31. The output 34 may also be combined with the input 33 into a single bidirectional interface.

For example, the processing device 32 can be a processor adapted to perform the steps according to one of the described methods. In an embodiment said adaptation comprises that the processor is configured, e.g. programmed, to perform steps according to one of the described methods.

A processor as used herein may include one or more processing units, such as microprocessors, digital signal processors, or combination thereof.

The storage unit 26 and the memory device 31 may include volatile and/or non-volatile memory regions and storage devices such as hard disk drives, DVD drives, and solid-state storage devices. A part of the memory is a non-transitory program storage device readable by the processing device 32, tangibly embodying a program of instructions executable by the processing device 32 to perform program steps as described herein according to the principles of the invention.

In the following further implementation details shall be described.

The proposed solution consists basically of three steps. In the first step the user creates multiple listening regions, e.g. using a user interface of a playback device. In the second step one set of loudspeaker correction gain and delay values is computed for each listening region. Both steps need to be performed only once because the gain and delay values are constant for each listening region. In the third step the gain and delay values for a selected listening region are applied to the signals of the corresponding loudspeakers.

In order to handle different listener arrangements, the user defines different listening regions for typical arrangements. A listening region specifies the area (region) where the listeners are located in the room. In the simplest case a listening region is described by one or more polygons or concatenated rectangles in a plane that is parallel to the floor and at the height of the listener's ears. This assumes that the ears of all listeners are approximately on the same level. If the height of the ears should also be variable a listening region can alternatively be defined by a three dimensional mesh grid or by concatenated cuboids. In the following for simplicity the 2D plane is used to describe the further processing.

The listening regions are preferably specified by the user relative to the loudspeaker positions using a top view of the listening room. It has to be assured that the distances between the loudspeakers and the borders of the listening region match the real distances in the room. Therefore, it is assumed that the absolute position of each loudspeaker, for example given in Cartesian coordinates, is known by the playback device. A grid of a variable scale, for example of 20cm × 20cm, can be used to help the user to approximate the right dimensions of the listening region in relation to the positions of the loudspeakers.

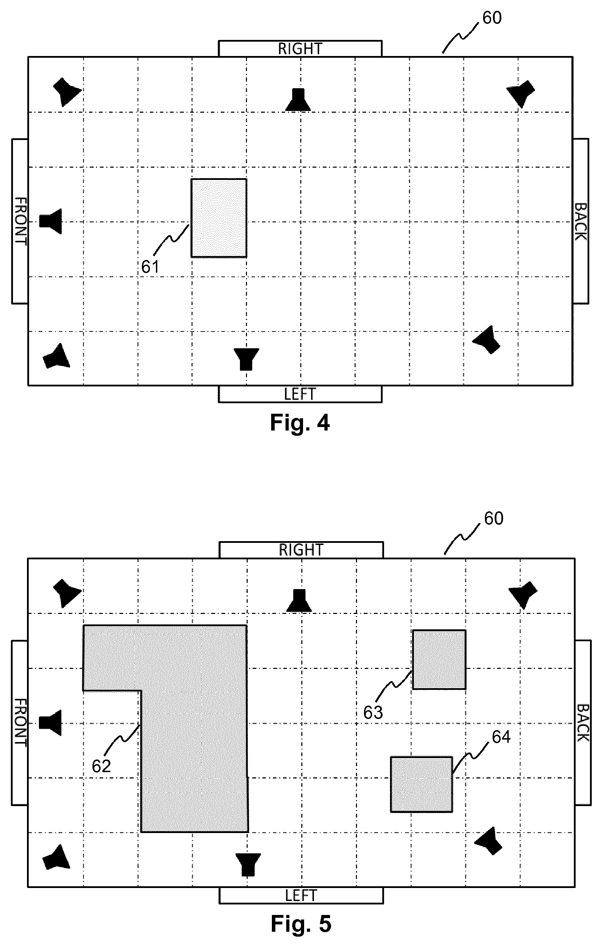

One example of a listening region for one listener is illustrated in Fig. 4. The orientation of the room 60 is indicated by the labels 'back', 'front', 'left', and 'right'. A small listening region 61, e.g. for one listener, is indicated by the grey area. Fig. 5 shows the same environment with several listening regions 62, 63, 64. Among these listening regions there are two small listening regions 63, 64 and one larger listening region 62 for multiple listeners. Some loudspeakers are very close to the listening regions. Only listening regions inside the area bounded by the loudspeakers are valid. Regions behind the loudspeakers are invalid. This aspect is preferably taken into account when the listening regions are specified by the user, e.g. by warning the user in case he tries to specify an invalid region.

For each listening region the following processing is applied. First the minimal distance between the listening region and each loudspeaker is computed. For all loudspeakers that have a minimal distance to the listening region that is smaller than a critical distance, correction gain and delay values are computed. The critical distance defines the distance for which the delay and level of the loudspeaker signal has to be adapted because it would otherwise be annoying for the closest listener. It is preferably computed from the well-known precedence or Haas effect. This effect describes the dominance of one sound source over another with respect to the relative delay and level differences between the sources. Thus a delay and a gain value are obtained to make the dominant sound from the closest loudspeaker less dominant relative to other loudspeaker signals.

In the following an exemplary solution for the computation of the critical distance $r_{crit}$, the gain value $a_i$, and the time delay value $\Delta t_i$ for the adaptation of the $i$-th loudspeaker signal $x_i$ at a minimal distance $r_i$ between the listener area and the loudspeaker shall be described. In a first step the vector $v$ pointing to the geometric centroid of the loudspeaker setup is computed:

$$v = \frac{1}{L}\sum_{i=1}^{L} x_i \, ,$$

where $L$ is the total number of loudspeakers and $x_i$ describes the position of the $i$-th loudspeaker by a vector in Cartesian coordinates. Also computed is the average distance of the given loudspeaker setup

$$r_{mean} = \frac{1}{L}\sum_{i=1}^{L} |v - x_i| \, ,$$

where $|v - x_i|$ defines the Euclidean distance between the two vectors.

The critical distance can be computed from the precedence effect. The precedence effect says that if the time delay between two identical signals that arrive from two different directions at the listener is less than 5ms, the listener will perceive only one source at a position in between the two impinging directions. Therefore, one source is not perceived as dominant over the other if the precedence effect is valid. As a compromise for all listeners it is assumed that a loudspeaker is perceived as dominant if its signal arrives $\Delta t_{max}$ = **5ms** earlier at the position $v$ than a signal of a loudspeaker that has a distance of $r_{mean}$ to $v$. The critical distance between a loudspeaker and the listening array is then defined by

$$r_{\text{crit}} = \max(r_{\text{mean}} - c \cdot \Delta t_{\text{max}}, 0),$$

with the speed of sound $c \approx 343 \frac{m}{s}$.

The pressure level of a spherical source, which is used to model the loudspeaker, is inversely proportional to the distance from the source. The idea is to correct the pressure level of the loudspeaker to the level at the distance $r_{\text{crit}}$ by:

$$\frac{a_i}{r_i} x_i = \frac{x_i}{r_{\text{crit}}}.$$

Under consideration of some boundary values the gain values are computed from:

$$a_i = \begin{cases} \dfrac{r_i}{r_{\text{crit}}} & \text{for } (r_i < r_{\text{crit}}) \wedge (r_{\text{crit}} > 0) \\ \dfrac{r_i}{r_{\text{mean}}} & \text{for } (r_i < r_{\text{crit}}) \wedge (r_{\text{crit}} = 0) \\ 1 & \text{else} \end{cases}$$

For example, the gain value may be corrected to the level at the average loudspeaker distance if the critical distance is equal to zero.

The signal of a loudspeaker that has a minimal distance smaller than the critical distance is delayed in a way that the total runtime from the loudspeaker to the listening array is equal to $\frac{r_{\text{crit}}}{c}$. Therefore, the additional time delay values are determined by:

$$\Delta t_i = \begin{cases} \dfrac{r_{\text{crit}} - r_i}{c} - & \text{for } r_i < r_{\text{crit}} \\ 0 & \text{else} \end{cases}$$

Finally, the corrected speaker signals $\hat{x}_i(t)$ are determined from

$$\hat{x}_i(t) = a_i \cdot x_i(t - \Delta t_i).$$

For playback the user selects the listening region that best matches the actual positioning of the listeners. The gain and delay values that have been computed for the selected listening region are then applied to the corresponding loudspeaker signals.

**Claims**

1. A method for multichannel audio playback adaptation, the method **comprising:**

    - receiving (10) a user input defining a listening region relative to a loudspeaker arrangement;
    - determining (11) minimal distances between the listening region and the loudspeakers;
    - comparing (12) the determined minimal distances with a critical distance; and
    - adapting (13) output parameters for those loudspeakers for which the determined minimal distance is below the critical distance.

2. The method according to claim 1, **wherein** the user input is obtained by a touch pad of an input device.

3. The method according to claim 1 or 2, **further** comprising checking whether the user input defines an invalid listening region.

4. The method according to one of the preceding claims, **wherein** the output parameters for those loudspeakers for which the determined minimal distance is below the critical distance are adapted (13) such that sound produced by those loudspeakers is less dominant relative to sound produced by the other loudspeakers.

5. The method according to one of the preceding claims, **wherein** the output parameters that are adapted (13) are gain parameters and delay parameters.

6. The method according to one of the preceding claims, **wherein** the critical distance is determined based on the precedence or Haas effect.

7. The method according to one of the preceding claims, **further** comprising receiving a further user input selecting a listening region among one or more defined listening regions and adapting output parameters of the loudspeakers such that audio playback is optimized for the selected listening region.

8. A computer readable storage medium having stored therein instructions enabling multichannel audio playback adaptation, wherein the instructions, when executed by a computer, cause the computer to:

    - receive (10) a user input defining a listening region relative to a loudspeaker arrangement;
    - determine (11) minimal distances between the listening region and the loudspeakers;
    - compare (12) the determined minimal distances with a critical distance; and
    - adapt (13) output parameters for those loudspeakers for which the determined minimal distance is below the critical distance.

9. An apparatus (20) for multichannel audio playback adaptation, the apparatus (20) **comprising:**

   - an input (21) configured to receive (10) a user input defining a listening region relative to a loudspeaker arrangement;
   - a distance calculating unit (22) configured to determine (11) minimal distances between the listening region and the loudspeakers;
   - a comparator (23) configured to compare (12) the determined minimal distances with a critical distance; and
   - a parameter setting unit (24) configured to adapt (13) output parameters for those loudspeakers for which the determined minimal distance is below the critical distance.

10. An apparatus (30) for multichannel audio playback adaptation, the apparatus (30) comprising a processing device (31) and a memory device (32) having stored therein instructions, which, when executed by the processing device (32), cause the apparatus (30) to:

   - receive (10) a user input defining a listening region relative to a loudspeaker arrangement;
   - determine (11) minimal distances between the listening region and the loudspeakers;
   - compare (12) the determined minimal distances with a critical distance; and
   - adapt (13) output parameters for those loudspeakers for which the determined minimal distance is below the critical distance.

Receive user input
defining listening region

10

Determine minimal
distances to loudspeakers

11

Compare minimal distances
with critical distance

12

Adapt output
parameters

13

**Fig. 1**

40    22    23    24    20    50

21    24    25

**Fig. 2**

40    31    32    30    50

33    34

**Fig. 3**

**Fig. 4**

**Fig. 5**

Europäisches
Patentamt

European
Patent Office

Office européen
des brevets

# EUROPEAN SEARCH REPORT

**Application Number**

EP 16 30 5199

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 443 804 A2 (DENON LTD [JP]) 4 August 2004 (2004-08-04) * paragraphs [0015], [0016], [0027] - [0035]; figures 2,7-8 * ----- | 1-10 | INV. H04S7/00 |
| A | WO 2014/163657 A1 (THOMSON LICENSING [FR]; REDMANN WILLIAM GIBBENS [US]) 9 October 2014 (2014-10-09) * page 6, line 1 - page 9, line 17; figures 1,2 * ----- | 1-10 | |
| A | US 2006/083383 A1 (CRUNDWELL DUNCAN J [US] ET AL) 20 April 2006 (2006-04-20) * paragraph [0050] - paragraph [0109]; figures 1-20 * ----- | 1-10 | |

**TECHNICAL FIELDS SEARCHED (IPC)**

H04S

The present search report has been drawn up for all claims

| Place of search | Date of completion of the search | Examiner |
|---|---|---|
| Munich | 20 July 2016 | Righetti, Marco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................................
& : member of the same patent family, corresponding
    document

EPO FORM 1503 03.82 (P04C01)

**EP 3 209 035 A1**

## ANNEX TO THE EUROPEAN SEARCH REPORT
## ON EUROPEAN PATENT APPLICATION NO.

EP 16 30 5199

20-07-2016

| Patent document cited in search report | | | Publication date | Patent family member(s) | | | Publication date |
|---|---|---|---|---|---|---|---|
| EP 1443804 | | A2 | 04-08-2004 | DE | 60317297 | T2 | 28-08-2008 |
| | | | | EP | 1443804 | A2 | 04-08-2004 |
| | | | | JP | 2004241820 | A | 26-08-2004 |
| | | | | US | 2004151476 | A1 | 05-08-2004 |
| WO 2014163657 | | A1 | 09-10-2014 | CA | 2908637 | A1 | 09-10-2014 |
| | | | | CN | 105210388 | A | 30-12-2015 |
| | | | | EP | 2982138 | A1 | 10-02-2016 |
| | | | | JP | 2016518067 | A | 20-06-2016 |
| | | | | KR | 20150139849 | A | 14-12-2015 |
| | | | | US | 2016050508 | A1 | 18-02-2016 |
| | | | | WO | 2014163657 | A1 | 09-10-2014 |
| US 2006083383 | | A1 | 20-04-2006 | NONE | | | |

EPO FORM P0459